# EUROPEAN PATENT APPLICATION

(11) **EP 1 464 386 A1**
(43) Date of publication of application: **06.10.2004**
(21) Application number: 03701020.4
(22) Date of filing: 07.01.2003
(51) Int. Cl.: B01J 19/00, B07B 1/00, B07B 7/08, C01G 23/04

(54) **METHOD FOR SEPARATING PARTICLES DIFFERENT IN SIZE, STRUCTURE, OR FUNCTION AND APPARATUS THEREFOR**

(30) Priority: 08.01.2002 JP 2002001591
(71) Applicant: National Institute of Advanced Industrial Science and Technology, Tokyo 100-8921 (JP); JAPAN SCIENCE AND TECHNOLOGY CORPORATION, Kawaguchi-shi, Saitama 332-0012 (JP)
(72) Inventor: SHIMURA, Hirofumi, Tsukuba-shi, Ibaraki 305-0071 (JP); SETO, Takafumi, Tsukuba-shi, Ibaraki 305-0031 (JP); AYA, Nobuhiro, Tsukuba-shi, Ibaraki 305-0044 (JP); HIRASAWA, Makoto, Tsukuba-shi, Ibaraki 305-0032 (JP)
(74) Representative: Findlay, Alice Rosemary
(86) International application number: PCT/JP2003/000041
(87) International publication number: WO 2003/057363

(57) **Abstract**

A method and an apparatus for separating fine particles of different fine particle sizes, structures, and functions are provided. The method includes the steps of introducing a group of fine particles of different sizes, structures, and functions into an atmosphere of an adsorption fluid; effecting critical adsorption of the adsorption molecular species to specific sites of the fine particles and, subsequently, separating the fine particles according to size, structure, or function based on one of the masses, the particle diameters, the fluid resistances, and the functions of adsorption abilities to a third substance, which have been changed due to the critical adsorption, or at least two of them in combination.

## Description

### Technical Field

The present invention relates to a method and an apparatus for separating fine particles of different masses, sizes, shapes, structures, functions, and the like. Further specifically, it relates to a method and an apparatus for separation, which can be widely used in various fields, for example, a material field, a manufacturing technique field, a separation apparatus field, a structure analyzer field, a photoelectric conversion material field, and a catalyst field.

### Background Art

Examples of previously known methods for separating fine particles include a method through the use of the difference in the fluid resistances of fine particles, a method through the use of difference in the sizes of fine particles, a method through the use of difference in the masses of fine particles, and a method through the use of difference in the inertial forces of fine particles.

For example, with respect to fine particles made of the same elements and having the same particle diameter and the same mass, the properties and the functions of the fine particles vary depending on the differences in the crystal structures and the surface conditions thereof. In the case where these fine particles having sizes, structures, and functions with respective distributions are used as, in particular, functional materials, if the fine particles are used in a mixed state without being separated according to function, the occurrence of the reduction in performance cannot be avoided. Fine particles having a uniform particle diameter or mass can be prepared by the known classification method through the use of the fluid resistance or the mass separation method. However, it has not been able to achieve the separation of the above-described fine particles according to surface structure or function.

### Disclosure of Invention

In order to overcome the above-described problems, a method, in which only fine particles having a specific size, structure, and function are selectively separated from fine particles having sizes, structures, and functions with respective distributions, is required.

The inventors of the present invention found out that fine particles having a specific size, structure, and function were able to be separated by effecting critical adsorption of an adsorption gas, which is a component different from the fine particles, to surfaces of the fine particles and, thereby, increasing the particle diameters or the masses. Consequently, the present invention has been completed.

In order to achieve the above-described objects, a method for separating fine particles according to the present invention includes the steps of introducing a group of fine particles of different sizes, structures, and functions into an atmosphere of an adsorption gas or a solution containing adsorption molecular species; effecting critical adsorption of the adsorption gas to specific sites of the fine particles; and subsequently, separating the fine particles according to size, structure, or function based on one of differences in the masses, the particle diameters, the fluid resistances, the adsorption abilities to a third substance, and the like, which have been changed due to the critical adsorption, or at least two of the differences in combination.

Preferably, the specific sites of the above-described fine particles are shear surfaces of the Magneli phase.

At least one selected from the group consisting of rare gases, chlorofluorocarbon-based gases, hydrocarbons, carbon dioxide, carbon tetrachloride, and other chemical species having low reactivity may be used as the above-described adsorption gas. At least one selected from the group consisting of liquefied rare gases, chlorofluorocarbon-based liquids, hydrocarbons, liquefied carbon dioxide, and other chemical species, the amount of adsorption of which can readily be controlled by temperature and concentration conditions, may be used as the above-described adsorption molecular species.

A compound having nonstoichiometric bonds, specifically, a metal oxide, e.g., titanium oxide, vanadium oxide, or tungsten oxide, is suitable for the fine particles of different sizes, structures, and functions.

On the other hand, an apparatus for separating fine particles according to the present invention includes a fine particle manufacturing apparatus provided with a laser irradiation apparatus for irradiating a target placed in a closed space; a critical adsorption apparatus in which the pressure of the atmosphere, the oxygen partial pressure, and the temperature can be controlled by a control device and in which the fine particles produced by the above-described fine particle manufacturing apparatus are brought into contact with an adsorption gas; and a separation apparatus for separating the fine particles according to size, structure, or function after the adsorption is effected.

It is desirable that the target used for the above-described fine particle manufacturing apparatus is titanium oxide, vanadium oxide, or tungsten oxide, and a differential mobility analyzer is suitable for the apparatus for separation according to size.

### Brief Description of the Drawings

Fig. 1 is a conceptual diagram showing a manner of the critical adsorption to a nonstoichiometric metal compound having the Magneli phase.
Fig. 2 is a conceptual diagram showing a manner of the structure separation.
Fig. 3 is a configuration diagram showing the outline of an apparatus for separating fine particles of different sizes, structures, and functions.
Fig. 4 is a photograph as a substitute for a diagram, showing an electron microscope image of titanium oxide fine particles produced.
Fig. 5 is a photograph as a substitute for a diagram, showing a high resolution electron microscope image of titanium oxide fine particles produced.
Fig. 6 is a graph showing the change of mass with the particle diameter in the case where one layer of xenon has adsorbed to the shear surface of TiO₂.

### Best Mode for Carrying Out the Invention

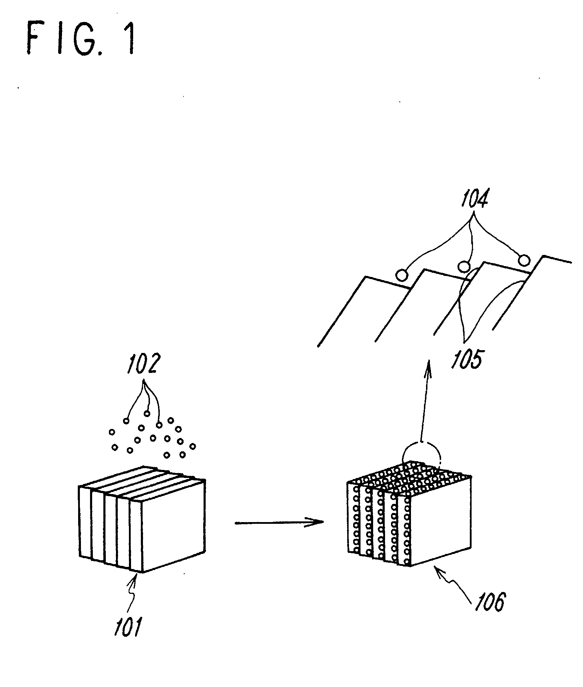

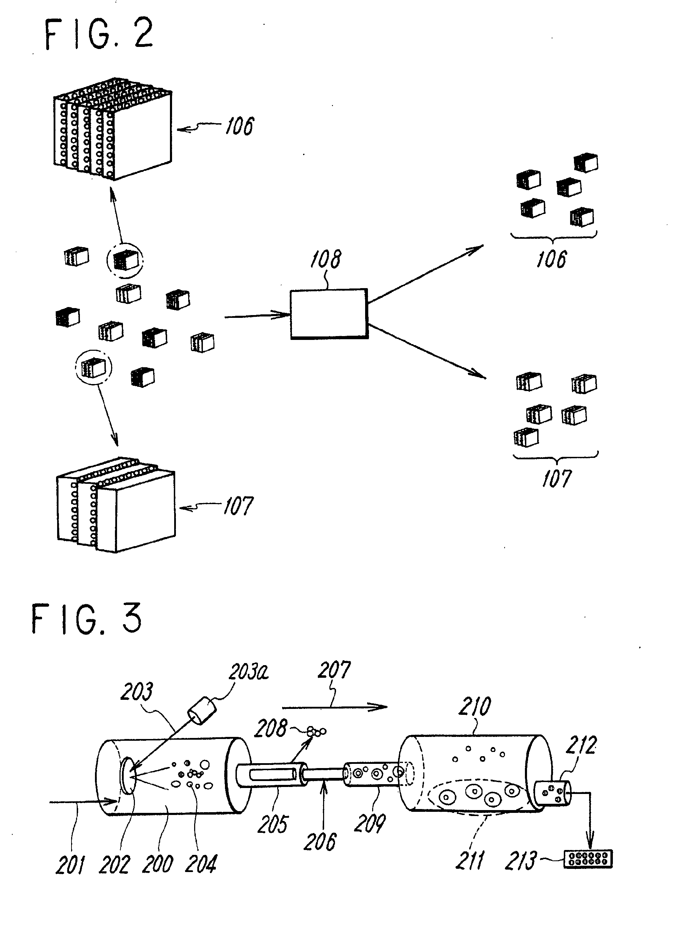

Detailed description will be made with reference to Fig. 1 and Fig. 2. In the present invention, nonstoichiometric metal oxide fine particles 101 of different sizes, structures, and functions are introduced into an adsorption gas atmosphere in which the temperature and the gas concentration can be controlled. An adsorption gas, e.g., an inert gas 102 selected from the group consisting of krypton, xenon, radon, nitrogen, and the like, is mixed so as to control the gas concentration. Thereafter, furthermore, the pressure and the temperature are controlled, and the critical adsorption of the gas molecules 104 to shear surfaces 105 formed on the surfaces of the nonstoichiometric metal oxide fine particles 101 is effected.

At this time, when the temperature is higher than the critical point of the adsorption, no inert gas is adsorbed by the shear surface, and when the temperature is lower than the criticality, all the inert gases are adsorbed. In the present invention, critical adsorption refers to a state in which the temperature is at a lower limit for adsorption of a specific adsorption gas to the shear surface.

According to the above-described adsorption, as shown in Fig. 2, nonstoichiometric metal oxide fine particles 106 adsorbing larger amounts of inert gas and nonstoichiometric metal oxide fine particles 107 adsorbing relatively small amounts of inert gas are produced depending on the difference in the number of shear surfaces.

Since the nonstoichiometric metal oxide fine particles 106 and the nonstoichiometric metal oxide fine particles 107 are different in the amounts of adsorbed gases, even when the particles have the same size, the masses are different and, thereby, separation can be performed with a separation apparatus 108.

The difference in the number of shear surfaces refers to the difference in the function. Therefore, the nonstoichiometric metal oxide fine particles 106 and the nonstoichiometric metal oxide fine particles 107 of different functions are separated by the above-described adsorption of different amounts.

Nonstoichiometric compound fine particles can also be prepared by a method through the use of heating in a crucible and chemical methods, e.g., chemical vapor deposition (CVD) and a liquid phase method. However, contamination of impurities into the fine particles cannot be avoided, and a temperature distribution occurs in a material during a plasma treatment of the metal oxide or a heat treatment in a hydrogen atmosphere, so that uniform fine particles cannot be produced. In a crystal growth method, preparation of the material takes much time. Consequently, it is desirable that the nonstoichiometric compound fine particles are prepared by laser ablation.

Among the nonstoichiometric compound fine particles, a nonstoichiometric metal compound having the Magneli phase is a typical compound in the present invention. The surface of this metal compound performs the electron donating and capturing function by photoexcitation and, therefore, this metal compound is used as a constituent of a new optical functional device, e.g., a photoelectric conversion element and a photocatalyst.

A typical compound having the Magneli phase, used in the present invention, is titanium oxide represented by a chemical formula TiₙO₂ₙ₋₁, and the ratio of the metal element to oxygen (n in the above-described chemical formula) relates to the shear surface spacing specific to this material, and is an important parameter in determination of the function. However, since the value of n has a wide distribution in a general production method, the performance of the function is interfered. Therefore, the control of this value of n is an essential problem to be solved in the development of a functional material through the use of the compound having the Magneli phase. This problem is overcome by the above-described method according to the present invention.

In the description with reference to Fig. 1 and Fig. 2, the inert gas primarily composed of a rare gas is used as the adsorption gas. However, as a matter of course, the adsorption gas may be other gases and liquids, which have low reactivity and which can be readily desorbed, for example, hydrocarbons, chlorofluorocarbons, carbon dioxide, and carbon tetrachloride.

Finally, the adsorbed gases are desorbed by heating and, thereby, pure fine particles having a uniform size, structure, and function can be produced.

Embodiments of an apparatus to perform the method for separating fine particles, according to the present invention, will be described below with reference to Fig. 3.

### 1. Preparation of nonstoichiometric metal oxide fine particles by laser ablation

In a separation apparatus of the present invention, a fine particle manufacturing apparatus for producing fine particles by a laser 203 from a laser irradiation apparatus 203a, a control apparatus for controlling the pressure of the atmosphere (several torrs to several hundred torrs), the oxygen partial pressure (0 to 10%), and the temperature, and the like are disposed in a gas flow path formed from a closed space 200.

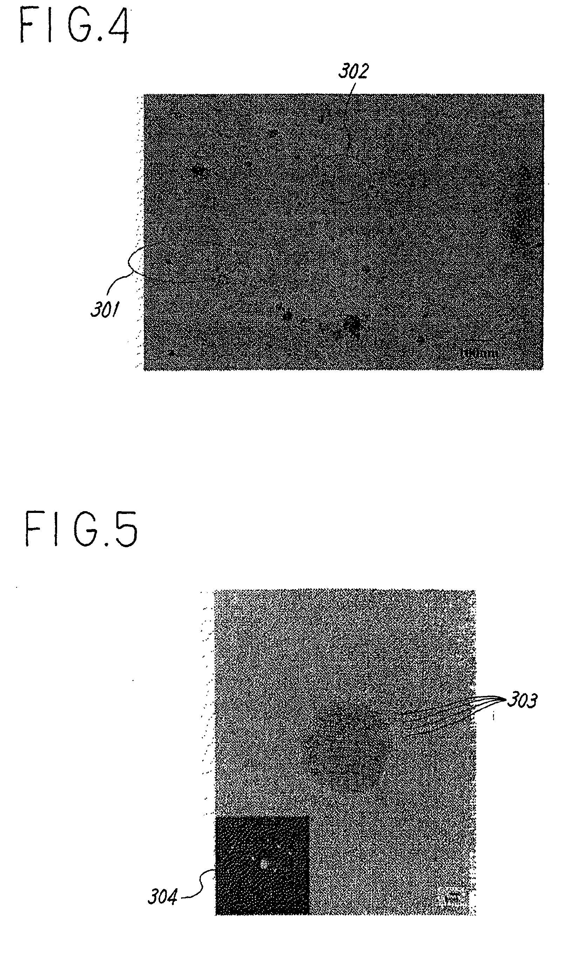

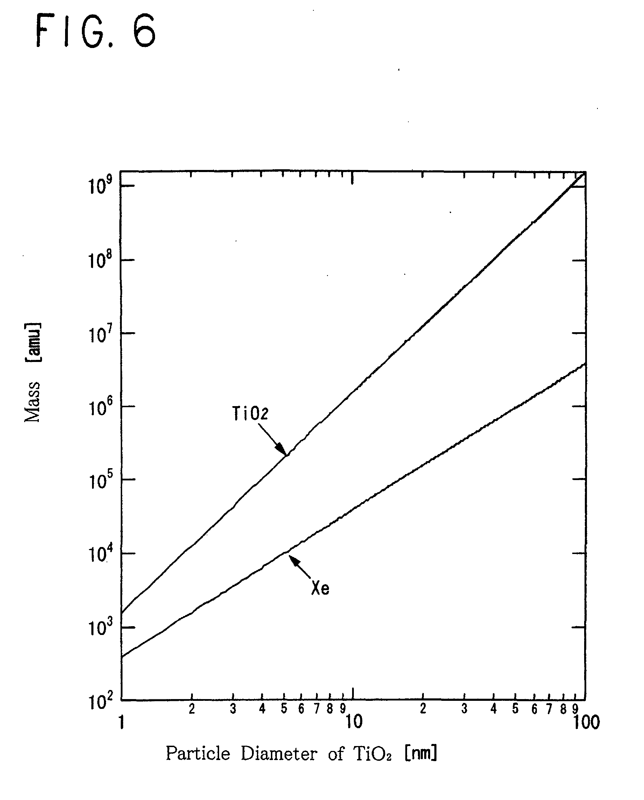

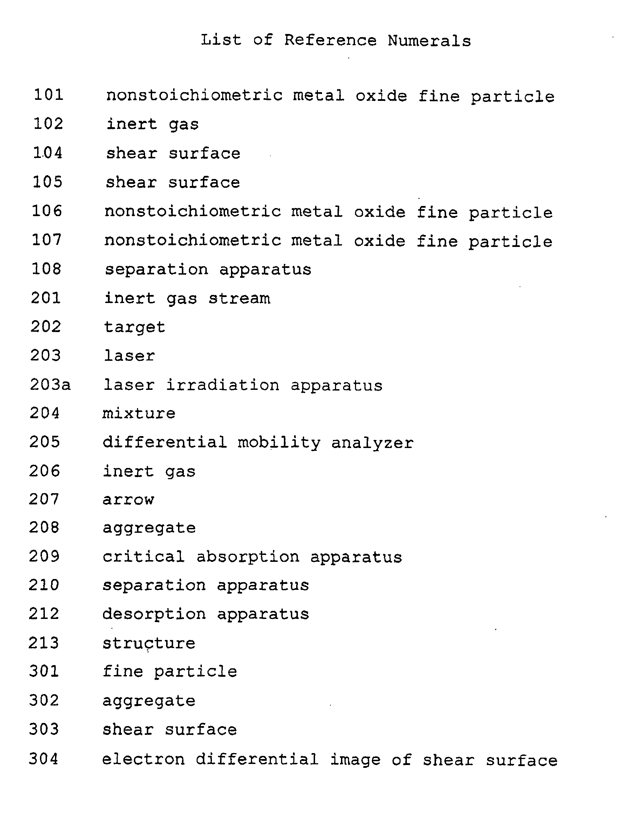

In the preparation of nonstoichiometric metal oxide fine particles, a metal oxide (titanium oxide, vanadium oxide, or the like) target 202 is irradiated with a laser 203 in a high purity inert gas stream 201 flowing in the direction indicated by an arrow 207 in the above-described gas flow path. Alternatively, a metal is irradiated with a laser in a mixed gas of an inert gas and oxygen while the pressure of the atmosphere, the oxygen partial pressure, and the temperature are controlled, and thereby, fine particles are produced. Preferably, the above-described target 200 forms a nonstoichiometric metal oxide. Fig. 4 shows an electron microscope image of titanium oxide fine particles produced in the experiment, and fine particles 301 having particle diameters of several nanometers to several hundred nanometers are observed. Nonstoichiometric metal oxide fine particles having shear surfaces 303, as shown in Fig. 5, are included as a part of these fine particles. In Fig. 5, the section indicated by reference numeral 304 shows an electron diffraction image of the shear surfaces 303. With respect to these fine particles, it is known that even when the substances are composed of the same elements, the particle diameters are the same, and the masses are the same, the functions, e.g., absorptivity and electrical conductivity, have distributions depending on the difference in the shear surface spacings.

### 2. Separation of nonstoichiometric metal oxide fine particles according to size, structure, or function

As shown in Fig. 3, the prepared mixture 204 containing nonstoichiometric metal oxide fine particles is passed through a differential mobility analyzer 205 for performing separation according to size, so as to remove aggregates 208. Subsequently, in a critical adsorption apparatus 209, the resulting mixture is mixed with a gas 206 which is krypton, xenon, radon, nitrogen, or other inert gas having a low critical temperature or a stable organic compound vapor while the conditions of pressure, temperature, and the like are controlled, and the two are brought into contact with each other, so that the selective critical adsorption of those gas molecules to specific shear surfaces is effected and, thereby, the particle diameters and the masses are increased selectively.

Thereafter, the compounds adsorbing the inert gas are separated by the use of a separation apparatus 210 composed of a mass separation apparatus and a differential mobility analyzer in combination, so that only the compound having desired shear surfaces is separated based on the difference in the structures.

Finally, in a desorption apparatus 212, the inert gas is desorbed by heating, and deposition on a substrate is performed, so that a structure 213 composed of fine particles having a uniform size, structure, and function is prepared.

### 3. Size, structure, or function separation apparatus

An apparatus for separation according to size, an apparatus for separation according to structure, or an apparatus for separation according to function may be used as the separation apparatus 210. Examples of apparatuses for separation according to size include a differential mobility analyzer, a filter, a mass separation apparatus, and a cyclone. Examples of apparatuses for separation according to structure include a mass separation apparatus, an impactor, a differential mobility analyzer, and a centrifugal separator. Examples of apparatuses for separation according to function include various types of chromatography.

### 4. Method for separation based on difference in shear surface spacings

The outline of the method for separation, according to the present invention, will be described below with reference to Fig. 3.

A solid metal oxide (titanium oxide, vanadium oxide, or tungsten oxide) target 202 is irradiated with a laser 203, a group of produced fine particles, which contain nonstoichiometric metal oxides and which are different in sizes, structures, and functions, are carried by a high purity inert gas stream 201.

Since the resulting fine particle mixture 204 contains aggregates 208, these are separated initially, so that fine particles having a uniform particle diameter are produced. Subsequently, an element (krypton, xenon, radon, nitrogen, a stable organic vapor, or the like) which has a low critical temperature, which is chemically inert, and which has a relatively large molecular weight is mixed. The resulting mixture is put into a critical adsorption apparatus 209 under controlled conditions of pressure, temperature, and the like, and physical critical adsorption of the gas to the fine particle surfaces is effected therein, so that the mass or surface area of the compound is increased in accordance with the number of shear surfaces.

Thereafter, separation is performed by mass screening or particle diameter screening, so that only the compounds having the same number of shear surfaces are separated.

### 5. Change in mass of fine particles due to critical adsorption

The calculation was performed with respect to the change in mass of fine particles in the case where xenon adsorbed to titanium oxide.

Here, it was assumed that a titanium oxide fine particle was a cube, and xenon adsorbed to four surfaces thereof. The van der Waals radius of adsorbed xenon was assumed to be 2.16 angstroms.

The density of titanium oxide was assumed to be 4.9 g/cm³. Fig. 6 shows the particle diameter versus the mass of one titanium oxide fine particle and the mass of adsorbed xenon when one atomic layer critical adsorption of xenon to the surface of this fine particle was effected.

When the particle diameter is within the range of 1 to 100 nanometers, the mass of adsorbed xenon is one to one-hundredth times the mass of titanium oxide and, therefore, separation can be performed by the mass separation method.

### 6. Properties of separated nonstoichiometric metal oxide fine particles

The nonstoichiometric metal oxides having a uniform structure, which are prepared and separated by the above-described method, have a visible light absorbing property and, in addition, donation and capture of electrons occur on the surface. Consequently, application to photocatalysts, solar batteries, and the like can be performed. The electrical resistance can be controlled in the wide rage from a conductor to an insulating material depending on the difference in stoichiometric ratios in the Magneli phases. Furthermore, since the chemical activity is increased by the presence of the shear surface on the surface, application to catalysts and the like can be performed.

The compounds having a uniform shear surface spacing, which have been separated by the method and apparatus described above in detail, are expected to be applicable as unprecedented excellent optical functional elements from the viewpoint of control of the light absorbing property, control of the electrical conductivity, and the like. In the above-described method and the apparatus, all processes can be continuously performed in a stream of a high purity inert gas and, thereby, the prepared fine particles have a very high purity, and are suitable for the continuous production as well.

### Industrial Applicability

The method and apparatus of the present invention for separating fine particles according to size, structure, or function can be widely applied to various fields, for example, a material field, a manufacturing technique field, a separation apparatus field, a structure analyzer field, a photoelectric conversion material field, and a catalyst field.

## Claims

1. A method for separating fine particles of different sizes, structures, and functions, the method comprising the steps of introducing a group of fine particles of different sizes, structures, and functions into an atmosphere of an adsorption gas; effecting critical adsorption of the adsorption gas to specific sites of the fine particles; and subsequently, separating the fine particles according to size, structure, or function based on one of differences in the masses, the particle diameters, the fluid resistances, the adsorption abilities to a third substance, and the like which have been changed due to the critical adsorption, or at least two of the differences in combination.

2. A method for separating fine particles of different sizes, structures, and functions, the method comprising the steps of introducing a group of fine particles of different sizes, structures, and functions into a solution containing adsorption molecular species; effecting critical adsorption of the adsorption molecules to specific sites of the fine particles; and subsequently, separating the fine particles according to size, structure, or function based on one of differences in the masses, the particle diameters, the fluid resistances, and the functions, e.g., adsorption abilities to a third substance, which have been changed due to the critical adsorption, or at least two of the differences in combination.

3. The method for separating fine particles of different sizes, structures, and functions according to Claim 1 or Claim 2, wherein the specific sites of the fine particles are shear surfaces of the Magneli phase.

4. The method for separating fine particles of different sizes, structures, and functions according to Claim 1 or Claim 3, wherein the adsorption gas is at least one selected from the group consisting of rare gases, chlorofluorocarbon-based gases, hydrocarbons, carbon dioxide, carbon tetrachloride, and other chemical species having low reactivity.

5. The method for separating fine particles of different sizes, structures, and functions according to Claim 2 or Claim 3, wherein the adsorption molecular species is at least one selected from the group consisting of liquefied rare gases, chlorofluorocarbon-based liquids, hydrocarbons, liquefied carbon dioxide, and other chemical species, the amount of adsorption of which can readily be controlled by temperature and concentration conditions.

6. The method for separating fine particles of different sizes, structures, and functions according to any one of Claim 1 to Claim 5, wherein the particles of different sizes, structures, and functions comprise a compound having nonstoichiometric bonds.

7. The method for separating fine particles of different sizes, structures, and functions according to Claim 6, wherein the compound having nonstoichiometric bonds is a metal oxide.

8. The method for separating fine particles of different sizes, structures, and functions according to Claim 7, wherein the metal oxide is titanium oxide, vanadium oxide, or tungsten oxide.

9. An apparatus for separating fine particles of different sizes, structures, and functions, the apparatus comprising a fine particle manufacturing apparatus provided with a laser irradiation apparatus for irradiating a target placed in a closed space; a critical adsorption apparatus in which the pressure of the atmosphere, the oxygen partial pressure, and the temperature can be controlled by a control device and in which the fine particles produced by the fine particle manufacturing apparatus are brought into contact with an adsorption gas; and a separation apparatus for separating the fine particles after the adsorption is effected.

10. The apparatus for separating fine particles of different sizes, structures, and functions according to Claim 9, wherein the target used for the fine particle manufacturing apparatus is titanium oxide, vanadium oxide, or tungsten oxide.

11. The apparatus for separating fine particles of different sizes, structures, and functions according to Claim 9, wherein the apparatus for performing separation according to size is a differential mobility analyzer.
